# EUROPÄISCHE PATENTSCHRIFT

(11) **EP 0 472 561 B1**
(45) Veröffentlichungstag und Bekanntmachung des Hinweises auf die Patenterteilung: **02.03.1994**
(21) Anmeldenummer: 90907006.2
(22) Anmeldetag: 11.05.1990
(51) Int. Cl.: B60T 8/32

(54) **ANTIBLOCKIERREGLER ODER ANTRIEBSSCHLUPFREGLER**
ANTILOCK BRAKING SYSTEM OR DRIVE SLIP CONTROL SYSTEM
REGULATEUR ANTIBLOCAGE OU REGULATEUR DE GLISSEMENT

(30) Priorität: 17.05.1989 DE 3916046
(43) Veröffentlichungstag der Anmeldung: 04.03.1992
(73) Patentinhaber: ROBERT BOSCH GMBH, 70442 Stuttgart (DE)
(72) Erfinder: SCHÄFER, Jochen, D-7140 Ludwigsburg (DE); DZIERZAWA, Günter, D-7050 Waiblingen-Hegnach (DE); SAUTER, Thomas, D-7148 Remseck 4 (DE)
(86) Internationale Anmeldenummer: EP9000759
(87) Internationale Veröffentlichungsnummer: WO9014256

(56) Entgegenhaltungen:
- EP-B- 0 073 198
- DE-A- 3 644 262
- DE-A- 3 709 158

## Beschreibung

### Stand der Technik

Aus der DE-OS 25 18 190 ist es bekannt, bei einem ABS Radschwingungen dadurch zu vermeiden, daß man nach einem Druckabbau und anschließender Konstanthaltephase, in der das Rad wieder hochläuft, einen erneuten Druckabbau für eine vorgegebene Zeit verhindert. Man kann hiermit Radschwingungen zwar verhindern, schränkt jedoch die Funktion des Reglers ein, der bei dieser Auslegung nicht mehr so schnell reagieren kann.

Aus der EP-PS 00 73 198 ist es bei einem ABS bekannt, das Radgeschwindigkeitssignal hinsichtlich physikalisch unmöglicher Änderungen zu filtern.

### Vorteile der Erfindung

Bei den erfindungsgemäß ausgebildeten Regler kommt nicht eine dauernd wirksame Maßnahme zum Einsatz, die die Reglerfunktion dauernd beeinflußt. Vielmehr wird eine Überwachung, ob eine Radgschwingung vorliegt, vorgesehen und nur dann, wenn eine solche erkannt wurde, wird eine Gegenmaßnahme eingeleitet. Eine Gegenmaßnahme bei ASR ist z.B. die Beeinflussung des Motordrehmoments. Es kann aber auch und dies gilt auch für ABS in die Druckvariation eingegriffen werden. So kann z.B. die Zeitdauer des Regelzyklus variiert, ein geforderter Druckaufbau unterdrückt und phasenverschoben ein Druckaufbau oder ein Druckhalten eingeleitet werden.

Es können mehrere Schwellen zum Auslösen verschiedener Maßnahmen zur Schwingungsunterdrückung vorgesehen werden.

### Figurenbeschreibung

Anhand der Zeichnung werden Ausführungsbeispiele der Erfindung erläutert.

### Es zeigen:

- Fig. 1: - ein Blockschaltbild eines ASR
- Fig. 2: - ein zugehöriges Diagramm
- Fig. 3: - ein Blockschaltbild eines anderen Ausführungsbeispiels.

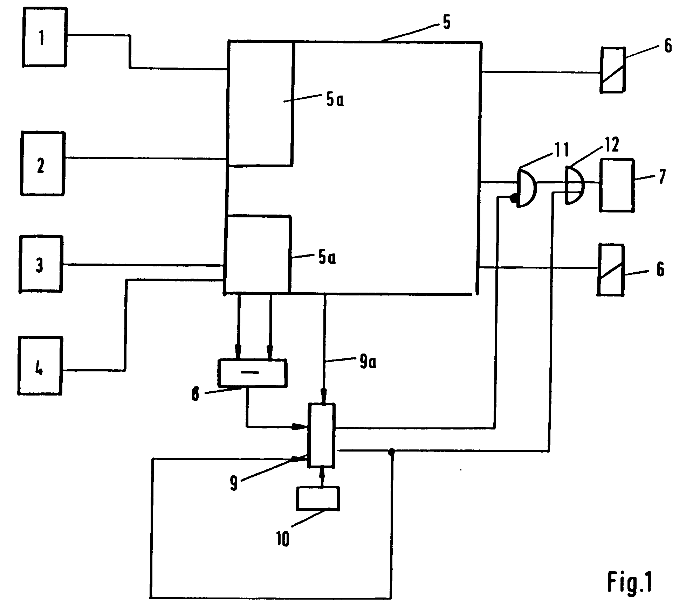

In Fig. 1 sind mit 1 bis 4 vier Meßwertgeber für die Radgeschwindigkeit bezeichnet. Sie liefern digitale Geschwindigkeitssignale an eine als Mikroprozessor ausgebildete Auswerteeinrichtung 5. Diese enthält in bekannter Weise Filter zur digitalen Filterung der Radgeschwindigkeitssignale der angetriebenen Räder, was durch Blöcke 5a angedeutet ist. Die Auswerteschaltung 5 erzeugt in bekannter Weise Steuersignale für den angetriebenen Rädern zugeordnete Bremssteuerventile 6 und für ein Steuerglied 7, das die Drosselklappe verstellen kann.

Um Radschwingungen zu erkennen, ist ein Subtraktionsglied 8 vorgesehen, dem das gefilterte (V_{RF}) und das ungefilterte Geschwindigkeitssignal (V_{R}) eines angetriebenen Rades zugeführt wird und das ein Signal abgibt, das dem Betrag der Differenz der beiden Signale entspricht: | V_{R} - V_{RF} |. Dieses Signal wird einem Zähler 9 zugeführt, der die Summe der im Zeitabstand des Arbeitstakts (Steuerleitung 9a) der Auswerteschaltung 5 erzeugten Differenzen bildet. Dem Zähler 9 wird bei jedem Arbeitstakt noch ein konstanter Wert aus einem Block 10 zugeführt, der von der Summe im Zähler 9 abgezogen wird. Dieser Wert ist so bemessen, daß bei einer kleinen Differenz der beiden Geschwindigkeitssignale, der Zähler nach unten korrigiert wird. Wird durch das Rechergebnis des Zählers 9 eine erste Schwelle überschritten, wird ein erstes Steuersignal erzeugt, mit dem die weitere Zufuhr eines Steuersignals zum Steuerglied 7 unterbunden wird (Und-Gatter 11).

Wird auch noch eine weitere Schwelle überschritten, so wird zusätzlich noch ein zweites Steuersignal über ein Oder-Gatter 12 eingekoppelt, das das Steuerglied im Sinne eines Schließens der Drosselklappe beeinflußt. Gleichzeitig wird der Zähler 9 in die Ausgangsstellung zurückgestellt. Auch eine Zurückstellung auf einen bestimmten Wert oder die Reduzierung um einen bestimmten Betrag wäre möglich.

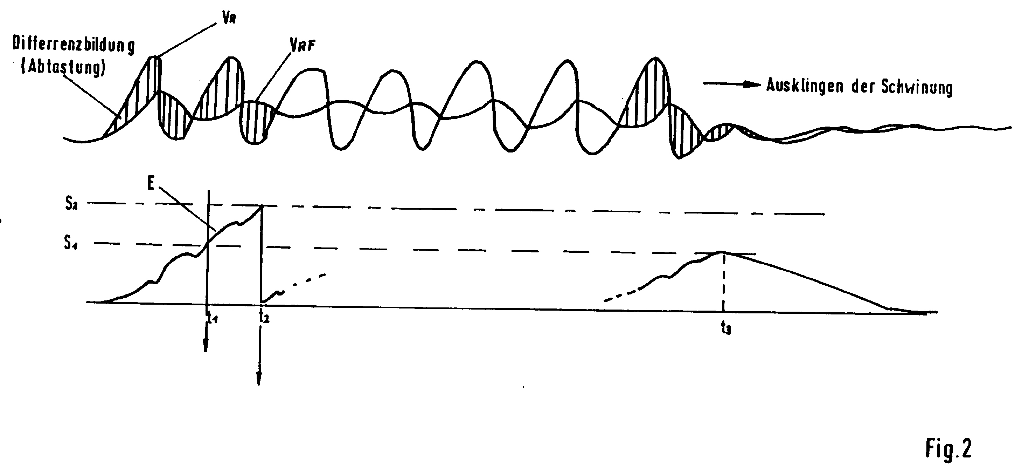

Fig. 2 zeigt die ungefilterte Radgeschwindigkeit V_{R} und die gefilterte Radgeschwindigkeit V_{RF} über der Zeit. Die Differenzen sind zum Teil gestrichelt eingezeichnet. Darunter ist das Ergebnis E des Rechenvorgangs des Zählers 9 dargestellt. Bei t₁ wird die erste Schwelle S₁ überschritten und die weitere Verstellung der Drosselklappe verhindert. Bei t₂ wird die zweite Schwelle S₂ überschritten und die Drosselklappe um einen Winkel zurückgenommen und der Zähler gelöscht.

Nach einigen solchen Vorgängen klingt in der Umgebung von t₃ die Schwingung ab.

Für das andere angetriebene Rad ist eine zweite Anordnung, die nicht dargestellt ist, vorgesehen.

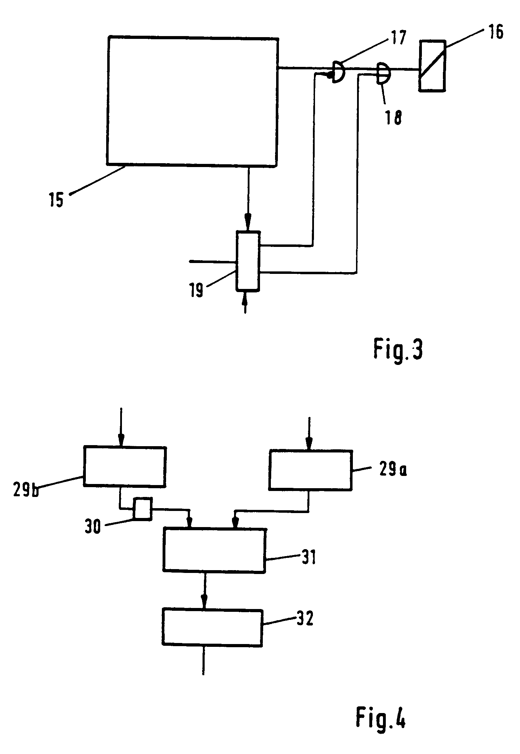

In Fig. 3 ist 15 eine Auswerteschaltung eines ABS; es ist nur ein einem Fahrzeugrad zugehöriges Ventil 16 vorgesehen. Im Falle einer Radschwingung wird bei Erreichen der ersten Schwelle hier die weitere Ansteuerung des Ventils 16 unterdrückt (Und-Gatter 17) und beim Erreichen der zweiten Schwelle Druck ab-/aufgebaut (Oder-Gatter 18), je nach Zustand der anderen Räder.

Gemäß einer Weiterbildung der Erfindung wird die beschriebene Anordnung sowohl an den Antriebsrädern als auch an den nichtangetriebenen Rädern vorgesehen. Dies hat den Vorteil, daß Radschwingungen, die aufgrund von Schlechtweg auftreten dadurch herausgefiltert werden können (d.h. der Regler nicht beeinflussen) daß das Ergebnis des Zählers der nichtangetriebenen Räder vom Ergebnis des Zählers der angetriebenen Räder, evtl. gewichtet, subtrahiert wird. Auf homogenen Reibwert, bei dem die nichtangetriebenen Räder "normal" laufen, wird der Zähler der Antriebsräder nicht beeinflußt.

Dies ist in Fig. 4 dargestellt. Dort ist mit 29a der einem engetriebenen Rad zugeordnete Zähler (entsprechend 9 der Fig. 1), mit 29 b der einem nicht angetriebenen Rad zugeordnete Zähler, mit 30 ein Gewichtungsblock und mit 31 ein Differenzbildner bezeichnet. Dieser bildet die Differenz des Zählerergebnisses des Zählers 29a und des z.B. mit 0,9 gewichteten Zählerergebnisse des Zählers 29b. Die Differenz wird dann der Schwellwertstufe 32 zugeführt, die bei Erreichen eines vorgegebenen Schwellwerts durch die Differenz ein Signal zur Beeinflussung des Motormoments abgibt. Im Falle einer Schlechtwegstrecke spricht der Eingriff wegen der Differenzbildung nicht an.

## Patentansprüche

1. Antiblockier- oder Antriebsschlupfregler, bei dem mittels Meßwertgeber die Radgeschwindigkeit wenigstens eines Fahrzeugrads gemessen, und bei dem in einer digital arbeitenden Auswerteschaltung aus den zugeführten digitalisierten Radgeschwindigkeitssignalen gefilterte Radgeschwindigkeitssignale gewonnen werden und daraus Steuersignale zur Beeinflussung des Radschlupfs abgeleitet werden, wobei Mittel zur Unterdrückung von Radschwingungen vorgesehen sind, dadurch gekennzeichnet, daß jeweils im Abstand des Arbeitstakts der Auswerteschaltung die Differenz der gefilterten und ungefilterten Radgeschwindigkeitssignale gebildet wird, daß die Beträge dieser Differenz aufaddiert werden und jeweils von der Summe (oder den Beträgen) jeweils ein vorgegebener Festwert abgezogen wird und daß bei Überschreiten einer vorgegebenen Schwelle durch das Ergebnis der Addition und Subtraktion ein Hilfssteuersignal zur Beeinflussung des Reglers im Sinne einer Minderung der Radschwingung erzeugt wird.

2. Regler nach Anspruch 1, dadurch gekennzeichnet, daß mehrere Schwellen vorgesehen sind, deren Überschreitung unterschiedliche Beeinflussungen bewirkt.

3. Antriebsschlupfregler nach Anspruch 1 oder 2, dadurch gekennzeichnet, daß die Motorleistung beeinflußt wird.

4. Antriebsschlupfregler nach Anspruch 3, dadurch gekennzeichnet, daß bei Erreichen einer ersten Schwelle die Motorleistung konstant gehalten und bei Erreichen einer zweiten Schwelle reduziert wird.

5. Regler nach einem der Ansprüche 1 bis 4, dadurch gekennzeichnet, daß die Bremsdruckvariation des Bremsreglers beeinflußt wird.

6. Regler nach einem der Ansprüche 1 - 5, dadurch gekennzeichnet, daß wenigstens einem angetriebenen und wenigstens einem nicht angetriebenen Rad ein Zähler zugeordnet ist, daß die Zählerergebnisse dieser Zähler gegebenenfalls gewichtet voneinander abgezogen werden und daß die Differenz der Schwellwertstufe zugeführt wird.

## Claims

1. Antilocking or drive slip controller, in which the wheel speed of at least one vehicle wheel is measured by means of a transducer, and in which in a digitally operating evaluation circuit, wheel speed signals filtered from the supplied digitized wheel speed signals are obtained, and from these control signals for influencing the wheel slip are derived, means being provided for the suppression of wheel vibrations, characterized in that the difference of the filtered and unfiltered wheel speed signals is formed at the time interval of the evaluation circuit working cycle, in that the amounts of these differences are added up, and that a specified fixed value is in each case subtracted from the sum (or the amounts), and in that when a predetermined threshold is exceeded by the result of addition and subtraction, an auxiliary control signal is generated to influence the controller so that a reduction of the wheel vibration is brought about.

2. Controller according to Claim 1, characterized in that several thresholds are provided, the exceeding of which will effect different influences.

3. Drive slip controller according to Claim 1 or 2, characterized in that the engine power is influenced.

4. Drive slip controller according to Claim 3, characterized in that on reaching a first threshold, the engine power is held constant, and on reaching a second threshold, it is reduced.

5. Controller according to one of Claims 1 to 4, characterized in that the brake pressure variation of the brake regulator is influenced.

6. Controller according to one of Claims 1 - 5, characterized in that to at least one driven and at least one non-driven wheel a counter is allocated, in that the results of these counters, weighted if appropriate, are subtracted from each other and in that the difference is fed to the threshold stage.

## Revendications

1. Régulateur anti-blocage ou régulateur anti-glissement, selon lequel un capteur de valeur mesure la vitesse de roue d'au moins une roue du véhicule et un circuit d'exploitation, numérique, fournit des signaux de vitesse de roue, filtrés à partir des signaux de vitesse, numériques, d'entrée, pour en déduire des signaux de commande influençant le patinage de roue, des moyens étant prévus pour éliminer les oscillations des roues, caractérisé en ce que à chaque fois à un intervalle de la cadence de fonctionnement du circuit d'exploitation, on forme la différence des signaux de vitesse de roue filtrés et non filtrés, on additionne les valeurs de cette différence et on retranche chaque fois de la somme (ou des valeurs) une valeur fixe prédéterminée, respective, et en ce que lors du dépassement d'un seuil prédéterminé par le résultat de l'addition ou de la soustraction, on génère un signal de commande auxiliaire pour influencer le système de régulation dans le sens d'une diminution de l'oscillation de roue.

2. Régulateur selon la revendication 1, caractérisé par plusieurs seuils dont le dépassement entraîne des influences différentes.

3. Régulateur anti-glissement selon la revendication 1 ou 2, caractérisé en ce qu'il influence la puissance du moteur.

4. Régulateur anti-glissement selon la revendication 3, caractérisé en ce que lorsqu'on atteint un premier seuil, on maintient constante la puissance du moteur et lorsqu'on atteint un second seuil, on réduit cette puissance.

5. Régulateur selon l'une des revendications 1 à 4, caractérisé en ce qu'on influence la variation de la pression de frein du régulateur de frein.

6. Régulateur selon l'une des revendications 1 à 5, caractérisé en ce qu'un compteur est associé à au moins une roue motrice et à au moins une roue non motrice, les résultats de ces compteurs étant le cas échéant retranchés de façon pondérée et la différence est fournie à l'étage de seuil.
